# EUROPÄISCHE PATENTSCHRIFT

(11) **EP 4 222 054 B1**
(45) Veröffentlichungstag und Bekanntmachung des Hinweises auf die Patenterteilung: **04.06.2025**
(21) Anmeldenummer: 21773693.3
(22) Anmeldetag: 09.09.2021
(51) Int. Cl.: B64D 27/355, B64D 33/08

(54) **VORRICHTUNG UND VERFAHREN ZUM KÜHLEN EINES WÄRMETAUSCHERS**
DEVICE AND METHOD FOR COOLING A HEAT EXCHANGER
DISPOSITIF ET PROCÉDÉ DE REFROIDISSEMENT D'UN ÉCHANGEUR DE CHALEUR

(30) Priorität: 30.09.2020 DE 102020212402
(43) Veröffentlichungstag der Anmeldung: 09.08.2023
(73) Patentinhaber: MTU Aero Engines AG, 80995 München (DE)
(72) Erfinder: LAW, Barnaby, 80995 München (DE)
(86) Internationale Anmeldenummer: PCT/DE2021/100744
(87) Internationale Veröffentlichungsnummer: WO 2022/068990

(56) Entgegenhaltungen:
- DE-B4- 112006 000 193
- GB-A- 2 545 246
- KR-A- 20120 114 874
- US-A1- 2009 032 130
- US-A1- 2017 166 320
- US-A1- 2017 211 474

## Beschreibung

Die Erfindung betrifft einen Flugantrieb und ein Verfahren zum Kühlen eines Wärmetauschers einer Brennstoffzelle eines Flugantriebs außerhalb einer Flugphase eines Flugzeugs, wobei der Flugantrieb eine Luftlinie mit wenigstens einem Kompressor zum Zuführen komprimierter Luft zum Betrieb der Brennstoffzelle aufweist.

Bei Flugantrieben mit Brennstoffzellen werden große Wärmemengen erzeugt, welche über Wärmetauscher abgeführt werden müssen, um ein Überhitzen der Brennstoffzellen zu verhindern. Entsprechend werden Wärmetauscher von solchen Flugantrieben gewöhnlich so angeordnet, dass Propeller-Abwind (downwash air) und/ oder Staudruckluft (ram air) zur Kühlung des wenigstens einen Wärmetauschers verwendet werden können. Am Boden, außerhalb einer Flugphase eines Flugzeugs steht hieraus keine Kühlluft bzw. keine ausreichende Menge an Kühlluft zur Verfügung. Während des Betriebs der Brennstoffzellen außerhalb einer Flugphase des Flugzeugs ist daher eine alternative Kühlung der Wärmetauscher erforderlich, um ausreichend Wärme von den Brennstoffzellen abzuführen. Am Flugzeug angeordnete zusätzliche Lüfter (Fans) zum Erzeugen eines Kühlluftstroms am Boden sind während der Flugphase überflüssig und wirken sich aerodynamisch eher nachteilig aus. Beispiele für Brennstoffzellenantriebe sind aus den Dokumenten GB2545246A und US20170211474A1 bekannt. Ein Strömungsverstärker ist aus dem Dokument US20090032130A1 bekannt. US 2017/166320 A1 offenbart ein Hilfstriebwerk mit einer Gasturbine und einer Brennstoffzelle.

Hiervon ausgehend ist es eine Aufgabe der vorliegenden Erfindung, einen verbesserten Flugantrieb für ein Flugzeug mit einer Vorrichtung und ein Verfahren zum Kühlen eines Wärmetauschers einer Brennstoffzelle des Flugantriebs außerhalb einer Flugphase des Flugzeugs vorzuschlagen. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird in einem ersten Aspekt ein Flugantrieb für ein Flugzeug mit einer Vorrichtung zum Kühlen eines Wärmetauschers einer Brennstoffzelle des Flugantriebs außerhalb einer Flugphase des Flugzeugs vorgeschlagen, wobei der Flugantrieb eine Luftlinie mit wenigstens einem Kompressor zum Zuführen komprimierter Luft für einen Betrieb der Brennstoffzelle aufweist. Die Vorrichtung weist dabei einen im Bereich des Wärmetauschers angeordneten Strömungsverstärker auf, der zum Leiten von Luft auf eine Kühlfläche des Wärmetauschers eingerichtet ist und eine nach dem wenigstens einen Kompressor angeordnete Verzweigung in der Luftlinie, über welche komprimierte Luft zum Strömungsverstärker leitbar ist.

Ähnlich wie konventionelle, mit Kerosin betriebene Strömungsmaschinen benötigt auch eine Brennstoffzelle eines Flugantriebs verdichtete Luft, um eine hohe Leistungsdichte zu erzielen. Elektrochemische Brennstoffzellen wandeln Brennstoff und Oxidationsmittel in elektrische Energie und ein Reaktionsprodukt um. Die Zufuhr von beim Flugantrieb üblicherweise als Oxidationsmittel dienender Umgebungsluft zur Brennstoffzelle erfolgt über eine Luftlinie, welche neben den erforderlichen Leitungen, Anschlüssen und Ventilen auch wenigstens einen Kompressor zum Komprimieren von aus der Umgebung angesaugter Luft aufweist. Zum Komprimieren der Luft können ein oder mehrere in Serie und/ oder parallel angeordnete Kompressoren bzw. Kompressorstufen vorgesehen sein. Da die Reaktion von Brennstoff und Oxidationsmittel sowohl Wärme als auch elektrischen Strom erzeugt, muss ein Brennstoffzellenstapel auch nach Erreichen einer Betriebstemperatur gekühlt werden, um eine Beschädigung der Brennstoffzellen zu vermeiden.

Eine solche Kühlung erfolgt üblicherweise mithilfe von wenigstens einem mit einem Kühlmittelkreislauf der Brennstoffzellen verbundenen Wärmetauscher, welcher während der Flugphasen von einer Fan- und/ oder Staudruckluftströmung überströmt wird. Dabei nimmt ein insbesondere eine Kühlfläche des Wärmetauschers überströmender Luftstrom Wärme auf und führt sie insbesondere konvektiv vom Wärmetauscher ab. Obwohl in den Ansprüchen und der Beschreibung "der Wärmetauscher" angegeben ist, kann der Wärmetauscher im Rahmen der Erfindung selbstverständlich auch mehrere räumlich nebeneinander und/ oder verteilt angeordnete Wärmetauschereinrichtungen aufweisen, welche insbesondere auch (jeweils) mehrere Kühlflächen aufweisen können. Als Kühlfläche wird in diesem Zusammenhang jede am Wärmetauscher angeordnete (Ober-)Fläche bezeichnet, welche sich durch die abzuführende Wärmeenergie erwärmt und von welcher mit einem diese überstreichenden Luftstrom Wärme abgeführt werden kann. Da die Brennstoffzellen des Flugantriebs wenigstens zum Teil auch außerhalb der Flugphase betrieben werden, wie beispielsweise zum Bereitstellen von Antriebsenergie für das Rollen auf dem Rollfeld oder zur Stromversorgung des Flugzeugs am Boden, steht in diesen Phasen keine ausreichende Fan- oder Staudruckluftströmung zum Abführen von Wärmeenergie vom Wärmetauscher der Brennstoffzellen zur Verfügung.

Zum Leiten der Luft auf eine Kühlfläche des Wärmetauschers weist die Vorrichtung des vorgeschlagenen Flugantriebs einen im Bereich des Wärmetauschers angeordneten Strömungsverstärker auf. Außerhalb der Flugphasen werden die Brennstoffzellen üblicherweise nur mit verringerter Leistung betrieben, weshalb auch nur eine verringerte Luftzufuhr zu den Brennstoffzellen erforderlich ist. Entsprechend steht dann freie Kompressorleistung zur Verfügung, welche zum Kühlen des Wärmetauschers der Brennstoffzellen verwendbar ist. Hierfür weist die Vorrichtung des vorgeschlagenen Flugantriebs in der Luftlinie der Brennstoffzelle eine nach dem wenigstens einen Kompressor angeordnete Verzweigung auf, über welche komprimierte Luft aus der Luftlinie abzweigbar und zum Strömungsverstärker leitbar ist. Die Verzweigung kann dabei abhängig vom Aufbau und der Leistungsfähigkeit des Kompressors nach einem ersten oder weiteren Kompressor angeordnet sein, insbesondere auch abhängig von der regelungstechnischen Integration der Verzweigungsschaltung beim Übergang in oder aus einer Flugphase. Beispielsweise kann über die Verzweigung nur ein Teil der an der Verzweigung verfügbaren komprimierten Luft entnommen werden oder die in einem Teilzweig des Kompressors verfügbare Luft zum Strömungsverstärker geleitet werden.

Die über die Verzweigung abgeleitete komprimierte Luft wird von dort zu einem im Bereich des Wärmetauschers angeordneten Strömungsverstärker geführt, welcher zum Leiten der Luft auf eine Kühlfläche des Wärmetauschers eingerichtet ist. Der Strömungsverstärker ist im Bereich des Wärmetauschers angeordnet und damit in einer geeigneten Position zum Leiten des verstärkten Luftstroms auf wenigstens eine Kühlfläche des Wärmetauschers. Insbesondere weist der Strömungsverstärker eine Luftauslassöffnung mit geeigneten Auslassgeometrien und/ oder Luftleiteinrichtungen auf, um eine insbesondere hinsichtlich der Strömungsgeschwindigkeit und -richtung vorteilhafte Luftströmung für einen effizienten Abtrag von Wärmeenergie vom Wärmetauscher auszubilden. Insbesondere weist die durch den Strömungsverstärker geführte komprimierte Luft eine nach dem Austreten aus dem Strömungsverstärker höhere Strömungsgeschwindigkeit auf, als vor dem Strömungsverstärker. Ein solcher Strömungsverstärker kann angepasst auf den spezifischen Einsatzort verschiedene Geometrien und Strömungsquerschnitte aufweisen. Entsprechend kann der Strömungsverstärker an den zur Verfügung stehenden Raum angepasst sein, weshalb solche Strömungsverstärker beispielsweise auch in engen Räumen angeordnet werden können und dennoch eine gute Luftstromführung erreichen. Insbesondere ist ein Strömungsverstärker so ausgebildet und angeordnet, dass dieser sich während der Flugphase nicht aerodynamisch nachteilig auswirkt.

Im Ergebnis ermöglicht der vorgeschlagene Flugantrieb mit der Vorrichtung das Abtragen von Wärmeenergie von einem Wärmetauscher einer Brennstoffzelle des Flugantriebs außerhalb einer Flugphase des Flugzeugs ohne zusätzliche aufwändige Einrichtungen zum Erzeugen eines Luftstroms, welche während der Flugphase überflüssig sind bzw. sich aerodynamisch nachteilig auswirken. Zum Abtragen der Wärmeenergie vom Wärmetauscher außerhalb der Flugphase wird eine vorhandene, am Boden nicht erforderliche Kompressorkapazität zum Komprimieren der Luft eingesetzt, welche zum Abtragen der überschüssigen Wärmeenergie genutzt werden kann. Auf diese Weise sind nur wenige zusätzliche Einrichtungen für die Kühlung des Wärmetauschers der Brennstoffzellen außerhalb der Flugphasen erforderlich.

Bei einer Ausführungsform des Flugantriebs arbeitet der Strömungsverstärker nach dem Venturi- und/ oder dem Coanda-Prinzip, um die Luft auf die Kühlfläche des Wärmetauschers zu leiten. Zusätzlich kann die Vorrichtung dabei neben der komprimierten Luft auch Umgebungsluft auf die Kühlfläche des Wärmetauschers leiten. Beispielsweise kann der Strömungsverstärker dabei so ausgebildet sein, dass dieser den Effekt einer (Venturi-) Strahlpumpe nutzt. Der vom Kompressor zugeführte Luftstrom bildet dabei das Treibmedium, so dass im Bereich des Strömungsverstärkers zusätzliche Umgebungsluft angesaugt und beschleunigt werden kann, bevor der hierbei gebildete verstärkte Luftstrom zur Kühlfläche des Wärmetauschers strömt. Alternativ oder in Kombination mit diesem Aufbau kann der Strömungsverstärker beispielsweise eine das Coanda-Prinzip nutzende Auslassöffnung aufweisen, bei welcher der Luftstrom über die Oberfläche einer sich in geeigneter Weise erweiternden Wandung geführt wird, an welcher sich der Luftstrom anschmiegt. Dabei ergibt sich im Zentrum der Auslassöffnung ein Druckabfall, durch welchen zusätzlich Umgebungsluft angesaugt und beschleunigt werden kann, bevor der dabei gebildete verstärkte Luftstrom zur Kühlfläche des Wärmetauschers strömt. Durch die Verwendung des Venturi- und/ oder des Coanda-Prinzips kann die vom Wärmetauscher abtragbare Wärmemenge erhöht werden.

Bei einer Ausführungsform des Flugantriebs ist vor dem Strömungsverstärker ein Stromregelventil angeordnet, mit welchem der dem Strömungsverstärker zugeführte Luftstrom regelbar ist. Mithilfe eines Stromregelventils kann der Durchfluss eines Strömungsverstärkers auf einfache Weise geregelt werden, um diesen insbesondere an den Kühlluftbedarf des Wärmetauschers anzupassen. Beispielsweise kann ein Stromregelventil in der Verzweigung der Luftlinie angeordnet sein.

Bei einer Ausführungsform des Flugantriebs ist der Strömungsverstärker wenigstens teilweise ringförmig ausgebildet. Bei einer solchen Ausführung kann der Luftstrom beispielsweise durch einen Ringkanal geführt werden, welcher an seiner radialen Innenseite eine im Wesentlichen parallel zur Richtung der Drehachse gerichtete Auslassöffnung aufweist. Im Zentrum des hierdurch ausgebildeten axial verlaufenden Luftstroms entsteht bei dieser Ausführung ein Unterdruck, durch den Umgebungsluft angesaugt wird, welcher die in Richtung des Wärmetauschers ausgebildete Luftströmung verstärkt. Mit einer solchen Ausführung ist ein gerichteter Luftstrom mit wenigstens teilweise kreisförmigen Querschnitt ausbildbar.

Bei einer Ausführungsform des Flugantriebs ist der Wärmetauscher in der Antriebsgondel angeordnet. Damit ist dieser insbesondere in räumlicher Nähe zu den in der Antriebsgondel (Nacelle) angeordneten Brennstoffzellen und deren Kühlmittelversorgung positioniert. Bei dieser Ausführungsform der Vorrichtung kann der Strömungsverstärker beispielsweise im Einlauf der Antriebsgondel angeordnet sein, so dass ein vom Strömungsverstärker ausströmender Luftstrom die Antriebsgondel axial durchströmt. Dabei kann der Luftstrom beim Durchströmen der Antriebsgondel die für die Kühlluftführung während der Flugphase vorgesehenen Strömungswege nutzen, um zu der wenigstens einen Kühlfläche des Wärmetauschers zu gelangen und um die dort aufgenommene Wärme aus der Antriebsgondel zu transportieren.

Bei einer Ausführungsform des Flugantriebs ist der Kompressor mehrstufig aufgebaut und die Verzweigung ist nach wenigstens einer ersten Stufe angeordnet. Der mehrstufige Kompressor für die Luftversorgung der Brennstoffzellen kann mehrere in Reihe und/ oder parallel angeordnete Kompressorstufen aufweisen, welche außerhalb der Flugphasen beispielsweise nur teilweise zur Versorgung weiterer Einrichtungen des Flugzeugs mit Kühlluft eingesetzt werden. Beispielsweise können außerhalb der Flugphase einzelne Kompressorstufen abgeschaltet sein, da sie zum Komprimieren der geringeren angeforderten Luftmenge nicht erforderlich sind. Entsprechend ist die Verzweigung zum Abzweigen von komprimierter Luft für den Strömungsverstärker so angeordnet, dass die Versorgung des Strömungsverstärkers gewährleistet und in geeigneter Weise in die Regelung des Kompressors integrierbar ist.

Zur Lösung der Aufgabe wird in einem zweiten Aspekt ein Verfahren zum Kühlen eines Wärmetauschers einer Brennstoffzelle eines Flugantriebs außerhalb einer Flugphase eines Flugzeugs vorgeschlagen, wobei der Flugantrieb eine Luftlinie mit wenigstens einem Kompressor zum Zuführen komprimierter Luft für einen Betrieb der Brennstoffzelle aufweist. Das Verfahren weist die folgenden Schritte auf:
- Komprimieren von Luft mit wenigstens einem Kompressor des Flugantriebs;
- Leiten der komprimierten Luft durch einen Strömungsverstärker auf eine Kühlfläche des Wärmetauschers;
- Aufnehmen der Wärmeenergie von der Kühlfläche durch den Luftstrom; und
- Abführen der Wärmeenergie mit den Luftstrom.

Bei dem vorgeschlagenen Verfahren wird zunächst Luft mit einem Kompressor des Flugantriebs komprimiert. Dies kann beispielsweise ein Kompressor sein, welcher zum Komprimieren der für den Betrieb der Brennstoffzelle erforderlichen Luft dient, welche der Brennstoffzelle über eine Luftlinie zugeführt wird. Da die Brennstoffzellen außerhalb der Flugphasen üblicherweise nur mit verringerter Leistung betrieben werden, ist auch nur eine verringerte Luftzufuhr zu den Brennstoffzellen erforderlich. Damit steht freie Kompressorleistung zur Verfügung, welche zum Komprimieren von Luft zum Kühlen des Wärmetauschers der Brennstoffzellen verwendbar ist. Bei dem vorgeschlagenen Verfahren wird die komprimierte Luft zu einem insbesondere im Bereich des Wärmetauschers angeordneten Strömungsverstärker geführt, welcher die Luft auf wenigstens eine Kühlfläche des Wärmetauschers leitet.

Der Strömungsverstärker modelliert das Strömungsprofil des Luftstroms insbesondere hinsichtlich der Strömungsgeschwindigkeit und -richtung dabei so, dass möglichst viel Wärmeenergie von der Kühlfläche des Wärmetauschers aufnehm- und abführbar ist. Auf diese Weise kann ein effizienter Abtrag von Wärmeenergie vom Wärmetauscher erfolgen. Insbesondere weist die durch den Strömungsverstärker geführte komprimierte Luft nach dem Austreten aus dem Strömungsverstärker eine höhere Strömungsgeschwindigkeit auf, als vor dem Strömungsverstärker.

Damit ermöglicht das vorgeschlagene Verfahren ein aufwandsarmes Abtragen von Wärmeenergie von einem Wärmetauscher einer Brennstoffzelle eines Flugantriebs außerhalb einer Flugphase eines Flugzeugs unter wenigstens teilweiser Verwendung bereits vorhandener Einrichtungen des Flugantriebs. Das Verfahren kann insbesondere mit dem vorausgehend beschriebenen Flugantrieb durchgeführt werden, welche die Merkmale einer oder mehrerer der hierzu beschriebenen Ausführungsformen aufweisen kann. Dabei kann das Verfahren entsprechend auch die hierzu beschriebenen Merkmale und Vorteile aufweisen.

Bei einer Ausführungsform des Verfahrens zum Kühlen eines Wärmetauschers leitet der Strömungsverstärker neben der komprimierten Luft auch Umgebungsluft auf eine Kühlfläche des Wärmetauschers. Dabei saugt der Strömungsverstärker Umgebungsluft an, welche durch den diesen zugeleiteten Luftstrom beschleunigt wird. Der so zusätzlich verstärkte Luftstrom strömt dann zur Kühlfläche des Wärmetauschers, um von dessen Kühlfläche(n) Wärmeenergie aufzunehmen und abzuführen. Auf diese Weise kann die vom Wärmetauscher abtragbare Wärmemenge erhöht werden.

Weitere Merkmale, Vorteile und Anwendungsmöglichkeiten der Erfindung ergeben sich aus der nachfolgenden Beschreibung im Zusammenhang mit den Figuren. Es zeigt
- Fig. 1: eine schematische Darstellung einer beispielhaften Vorrichtung eines erfindungsgemäßen des Flugantriebs zum Kühlen eines Wärmetauschers einer Brennstoffzelle eines Flugantriebs außerhalb einer Flugphase eines Flugzeugs;
- Fig. 2: eine schematische Schnittdarstellung eines beispielhaften Strömungsverstärkers; und
- Fig. 3: eine schematische Darstellung eines Ablaufdiagramms des erfindungsgemäßen Verfahrens.

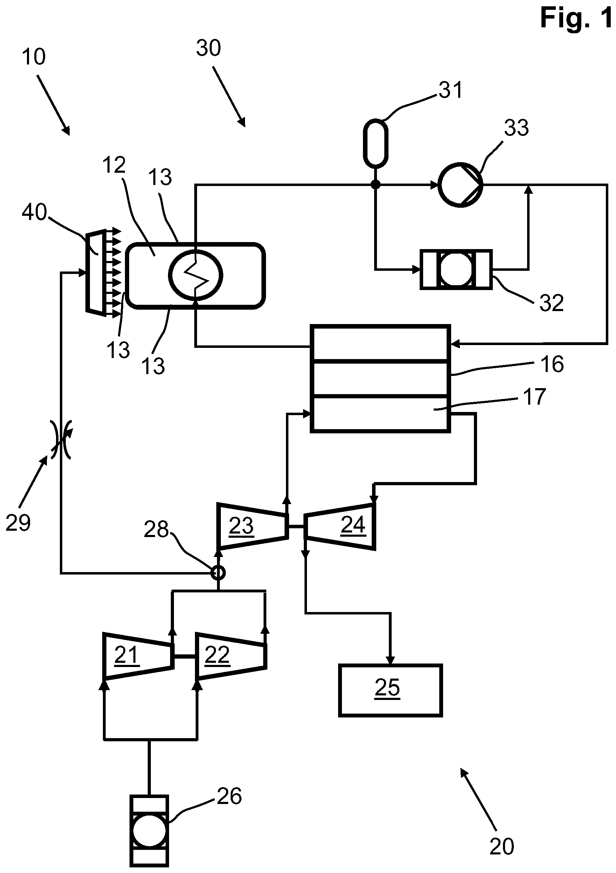

Fig. 1 zeigt eine schematische Darstellung einer beispielhaften Vorrichtung 10 eines erfindungsgemäßen Flugantriebs zum Kühlen eines Wärmetauschers 12 einer Brennstoffzelle 16 eines Flugantriebs außerhalb einer Flugphase eines Flugzeugs. Der Flugantrieb weist eine Luftlinie 20 zum Versorgen der Brennstoffzelle 16 mit Luft auf. Im dargestellten Ausführungsbeispiel weist die Luftlinie 20 drei Kompressoren 21, 22, 23 bzw. Kompressorstufen 21, 22, 23 zum Zuführen komprimierter Luft für einen Betrieb der Brennstoffzelle 16 auf. Zwei der Kompressoren 21, 22 bzw. Kompressorstufen 21, 22 sind bei der beispielhaften Ausführung parallel geschaltet, ein weiterer Kompressor 23 bzw. Kompressorstufe 23 ist diesen in Reihe nachgeschaltet. Dieser Kompressor 23 bzw. Kompressorstufe 23 wird zusätzlich von einer Turbine 24 angetrieben, welche von dem durch die Kathode(n) 17 der Brennstoffzelle(n) 16 geleiteten Luftstrom mit Drehenergie beaufschlagt wird, bevor die Luft über einen Luftauslass 25 aus der Luftlinie 20 entweicht. Die Umgebungsluft wird der Luftlinie 20 über einen Luftfilter 26 zugeführt.

Die Kühlung der Brennstoffzelle 16 erfolgt über einen Kühlkreislauf 30, welcher einen Kühlmittelspeicher 31, einen Filter 32, eine Kühlmittelpumpe 33 und einen luftgekühlten Wärmetauscher 12 zum Kühlen der Brennstoffzelle 16 aufweist. Das Kühlmittel wird dabei von der Kühlmittelpumpe 33 durch die Brennstoffzelle 16 gepumpt, wo es Wärmeenergie aufnimmt. Die Kühlflächen des Wärmetauschers werden während einer Flugphase des Flugzeugs von einer Flugluftströmung überströmt, welche in der Brennstoffzelle 16 erzeugte Strömungsenergie abführt.

Zum Abführen von überschüssiger Wärmeenergie der Brennstoffzelle 16 außerhalb der Flugphasen weist die Vorrichtung 10 zum Kühlen des Wärmetauschers 12 einen im Bereich des Wärmetauschers 12 angeordneten Strömungsverstärker 40 auf, der zum Leiten von Luft auf eine Kühlfläche 13 des Wärmetauschers 12 eingerichtet ist. Dem Strömungsverstärker 40 wird komprimierte Luft aus der Luftlinie 20 zugeführt, welche vorrangig zum Versorgen der Brennstoffzelle 16 während der Flugphase dient und außerhalb der Flugphase gewöhnlich nicht ausgelastet ist. Hierfür ist nach wenigstens einem Kompressor 21, 22 eine Verzweigung 28 in der Luftlinie 20 angeordnet, über welche beim Ausführungsbeispiel von den Kompressoren 21 und 22 komprimierte Luft zum Strömungsverstärker 40 leitbar ist. Vor dem Strömungsverstärker 40 ist bei der beispielhaften Ausführung ein Stromregelventil 29 angeordnet, mit welchem der dem Strömungsverstärker 40 zugeführte Luftstrom regelbar ist.

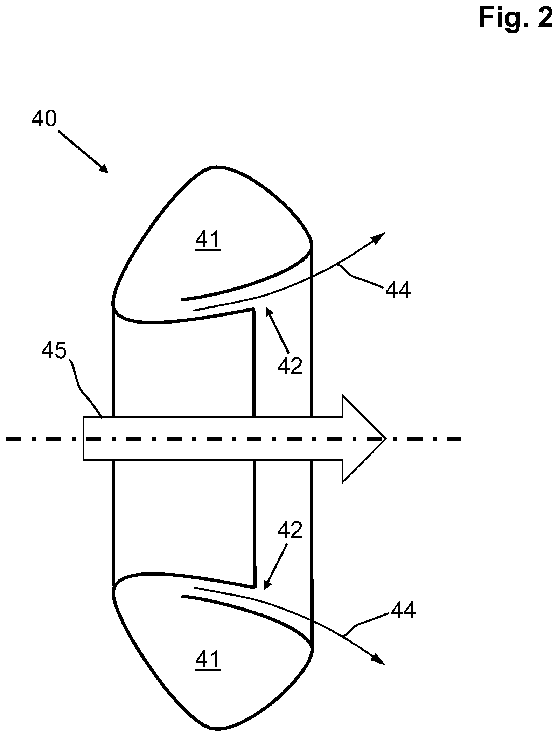

Fig. 2 zeigt eine schematische Schnittdarstellung eines beispielhaften Strömungsverstärkers 40, welcher ringförmig ausgebildet ist. Der aus der Luftlinie 20 abgezweigte Luftstrom wird durch einen ringförmigen Luftkanal 41 geführt, welcher an seiner radialen Innenseite eine im Wesentlichen parallel zur Richtung zur Drehachse gerichtete Auslassöffnung 42 aufweist. Der Luftstrom wird dabei über die Oberfläche der sich erweiternden Wandung geführt, an welcher sich die Strömung 44 entsprechend dem Coanda-Prinzip anschmiegt. Dabei bildet sich im Zentrum des Strömungsverstärkers 40 ein Unterdruck aus, durch welchen axial zusätzlich Umgebungsluft 45 angesaugt und beschleunigt wird. Der dabei gebildete verstärkte Luftstrom strömt dann zur Kühlfläche 13 des Wärmetauschers 12, um Wärmeenergie aufzunehmen und damit vom Wärmetauscher 12 abzuführen.

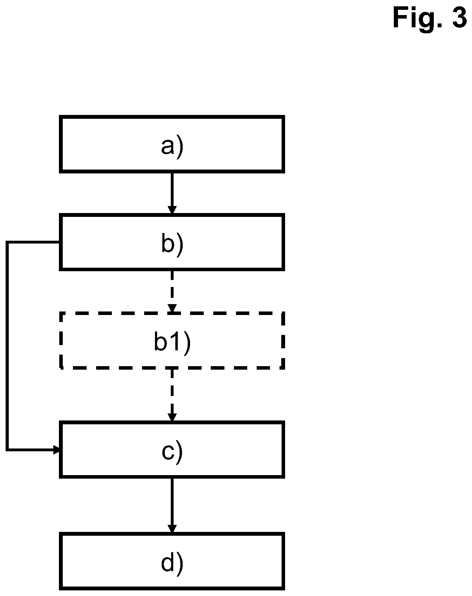

Fig. 3 zeigt eine schematische Darstellung eines Ablaufdiagramms des erfindungsgemäßen Verfahrens zum Kühlen eines Wärmetauschers 12 einer Brennstoffzelle 16 eines Flugantriebs außerhalb einer Flugphase eines Flugzeugs, wobei der Flugantrieb eine Luftlinie 20 mit wenigstens einem Kompressor 21, 22, 23 zum Zuführen komprimierter Luft für einen Betrieb der Brennstoffzelle 16 aufweist.

Das erfindungsgemäße Verfahren weist die folgenden Schritte auf: In einem ersten Schritt a) wird Luft mit wenigstens einem Kompressor 21, 22, 23 des Flugantriebs komprimiert und in einem zweiten Schritt b) durch einen Strömungsverstärker 40 auf eine Kühlfläche 13 des Wärmetauschers 12 geleitet. Bei einer Ausführung des Verfahrens kann der Strömungsverstärker 40 in einem Schritt b1) neben der komprimierten Luft auch Umgebungsluft auf eine Kühlfläche 13 des Wärmetauschers 40 leiten. Im einem Schritt c) nimmt der Luftstrom die Wärmeenergie von der Kühlfläche 13 des Wärmetauschers 12 auf und führt diese in einem weiteren Schritt d) von der Kühlfläche des Wärmetauschers ab.

### BEZUGSZEICHENLISTE

- 10: Vorrichtung
- 12: Wärmetauscher
- 13: Kühlfläche
- 16: Brennstoffzelle
- 17: Kathode
- 20: Luftlinie
- 21: Kompressor(-stufe)
- 22: Kompressor(-stufe)
- 23: Kompressor(-stufe)
- 24: Turbine(-nstufe)
- 25: Luftauslass
- 26: Luftfilter
- 28: Verzweigung
- 29: Stromregelventil
- 30: Kühlkreislauf
- 31: Kühlmittelspeicher
- 32: Filter
- 33: Kühlmittelpumpe
- 40: Strömungsverstärker
- 41: Luftkanal
- 42: Auslassöffnung
- 44: Strömung
- 45: Umgebungsluft

## Patentansprüche

1. Flugantrieb für ein Flugzeug, der eine Brennstoffzelle (16), eine Luftlinie (20) mit wenigstens einem Kompressor (21, 22, 23) zum Zuführen komprimierter Luft für einen Betrieb der Brennstoffzelle (16) und eine Vorrichtung (10) zum Kühlen eines Wärmetauschers (12) der Brennstoffzelle (16) außerhalb einer Flugphase des Flugzeugs aufweist, **gekennzeichnet durch** einen im Bereich des Wärmetauschers (12) angeordneten Strömungsverstärker (40), der zum Leiten von Luft auf eine Kühlfläche (13) des Wärmetauschers (12) eingerichtet ist und durch eine nach dem wenigstens einen Kompressor (21, 22, 23) angeordnete Verzweigung (28) in der Luftlinie (20), über welche komprimierte Luft zum Strömungsverstärker (40) leitbar ist.

2. Flugantrieb nach Anspruch 1, **dadurch gekennzeichnet, dass** der Strömungsverstärker (40) nach dem Venturi- und/ oder dem Coanda-Prinzip arbeitet, um die Luft auf die Kühlfläche (13) des Wärmetauschers (12) zu leiten.

3. Flugantrieb nach Anspruch 2, **dadurch gekennzeichnet, dass** der Strömungsverstärker (40) eingerichtet ist, neben der komprimierten Luft auch Umgebungsluft (45) auf die Kühlfläche (13) des Wärmetauschers (12) zu leiten.

4. Flugantrieb nach einem der vorhergehenden Ansprüche, **dadurch gekennzeichnet, dass** vor dem Strömungsverstärker (40) ein Stromregelventil (29) angeordnet ist, mit welchem der dem Strömungsverstärker (40) zugeführte Luftstrom regelbar ist.

5. Flugantrieb nach einem der vorhergehenden Ansprüche, **dadurch gekennzeichnet, dass** der Strömungsverstärker (40) wenigstens teilweise ringförmig ausgebildet ist.

6. Flugantrieb nach einem der vorhergehenden Ansprüche, **dadurch gekennzeichnet, dass** der Wärmetauscher (12) in der Antriebsgondel angeordnet ist.

7. Flugantrieb nach Anspruch 6, **dadurch gekennzeichnet, dass** der Strömungsverstärker (40) im Einlauf der Antriebsgondel angeordnet ist.

8. Flugantrieb nach einem der vorhergehenden Ansprüche, **dadurch gekennzeichnet, dass** der Kompressor (21, 22, 23) mehrstufig aufgebaut ist und die Verzweigung (28) nach wenigstens einer ersten Stufe (21, 22, 23) angeordnet ist.

9. Verfahren zum Kühlen eines Wärmetauschers (12) einer Brennstoffzelle (16) eines Flugantriebs außerhalb einer Flugphase eines Flugzeugs, wobei der Flugantrieb eine Luftlinie (20) mit wenigstens einem Kompressor (21, 22, 23) zum Zuführen komprimierter Luft für einen Betrieb der Brennstoffzelle (16) aufweist, **gekennzeichnet durch** die Schritte:
- Komprimieren von Luft mit wenigstens einem Kompressor (21, 22, 23) des Flugantriebs;
- Leiten der komprimierten Luft durch einen Strömungsverstärker (40) auf eine Kühlfläche (13) des Wärmetauschers (12);
- Aufnehmen der Wärmeenergie von der Kühlfläche (13) durch den Luftstrom; und
- Abführen der Wärmeenergie mit den Luftstrom.

10. Verfahren zum Kühlen eines Wärmetauschers gemäß Anspruch 9, **dadurch gekennzeichnet, dass** der Strömungsverstärker (40) neben der komprimierten Luft auch Umgebungsluft (45) auf eine Kühlfläche (13) des Wärmetauschers (12) leitet.

## Claims

1. Flight propulsion system for an aircraft, comprising a fuel cell (16), an air line (20) having at least one compressor (21, 22, 23) for supplying compressed air for operating the fuel cell (16), and a device (10) for cooling a heat exchanger (12) of the fuel cell (16) outside a flight phase of the aircraft, **characterized by** a flow amplifier (40), which is arranged in the region of the heat exchanger (12) and is designed to direct air onto a cooling surface (13) of the heat exchanger (12) and through a branch (28) arranged in the air line (20) so as to be downstream of the at least one compressor (21, 22, 23), via which branch compressed air can be directed to the flow amplifier (40).

2. Flight propulsion system according to claim 1, **characterized in that** the flow amplifier (40) operates according to the Venturi and/or Coanda principle in order to direct the air onto the cooling surface (13) of the heat exchanger (12).

3. Flight propulsion system according to claim 2, **characterized in that** the flow amplifier (40) is designed to direct ambient air (45) in addition to the compressed air onto the cooling surface (13) of the heat exchanger (12).

4. Flight propulsion system according to any of the preceding claims, **characterized in that** a flow control valve (29) is arranged upstream of the flow amplifier (40), by means of which the air flow supplied to the flow amplifier (40) can be regulated.

5. Flight propulsion system according to any of the preceding claims, **characterized in that** the flow amplifier (40) is at least partially annular.

6. Flight propulsion system according to any of the preceding claims, **characterized in that** the heat exchanger (12) is arranged in the propulsion nacelle.

7. Flight propulsion system according to claim 6, **characterized in that** the flow amplifier (40) is located in the inlet of the propulsion nacelle.

8. Flight propulsion system according to any of the preceding claims, **characterized in that** the compressor (21, 22, 23) is constructed so as to have several stages and the branch (28) is arranged downstream of at least a first stage (21, 22, 23).

9. Method for cooling a heat exchanger (12) of a fuel cell (16) of a flight propulsion system outside a flight phase of an aircraft, wherein the flight propulsion system has an air line (20) having at least one compressor (21, 22, 23) for supplying compressed air for operation of the fuel cell (16), **characterized by** the steps of:
- compressing air by means of at least one compressor (21, 22, 23) of the flight propulsion system;
- directing the compressed air through a flow amplifier (40) onto a cooling surface (13) of the heat exchanger (12);
- absorbing the thermal energy from the cooling surface (13) by means of the air flow; and
- dissipating the thermal energy by means of the air flow.

10. Method for cooling a heat exchanger according to claim 9,
**characterized in that** the flow amplifier (40) directs both the compressed air as well as ambient air (45) onto a cooling surface (13) of the heat exchanger (12).

## Revendications

1. Système de propulsion de vol pour un avion, présentant une pile à combustible (16), une conduite d'air (20) comportant au moins un compresseur (21, 22, 23) permettant d'amener de l'air comprimé pour un fonctionnement de la pile à combustible (16) et un dispositif (10) permettant de refroidir un échangeur de chaleur (12) de la pile à combustible (16) en dehors d'une phase de vol de l'avion, **caractérisé par** un amplificateur d'écoulement (40) disposé dans la zone de l'échangeur de chaleur (12), lequel amplificateur d'écoulement est configuré pour diriger de l'air sur une surface de refroidissement (13) de l'échangeur de chaleur (12), et à travers une ramification (28) disposée en aval de l'au moins un compresseur (21, 22, 23) dans la conduite d'air (20), par l'intermédiaire de laquelle ramification de l'air comprimé peut être dirigé vers l'amplificateur d'écoulement (40).

2. Système de propulsion de vol selon la revendication 1,
**caractérisé en ce que** l'amplificateur d'écoulement (40) fonctionne selon l'effet Venturi et/ou selon l'effet Coanda afin de diriger l'air sur la surface de refroidissement (13) de l'échangeur de chaleur (12).

3. Système de propulsion de vol selon la revendication 2,
**caractérisé en ce que** l'amplificateur d'écoulement (40) est configuré pour diriger non seulement l'air comprimé mais aussi l'air environnant (45) sur la surface de refroidissement (13) de l'échangeur de chaleur (12).

4. Système de propulsion de vol selon l'une des revendications précédentes, **caractérisé en ce qu'**une soupape de régulation d'écoulement (29) est disposée en amont de l'amplificateur d'écoulement (40), avec laquelle l'écoulement d'air amené à l'amplificateur d'écoulement (40) peut être régulé.

5. Système de propulsion de vol selon l'une des revendications précédentes, **caractérisé en ce que** l'amplificateur d'écoulement (40) est réalisé de manière au moins partiellement annulaire.

6. Système de propulsion de vol selon l'une des revendications précédentes, **caractérisé en ce que** l'échangeur de chaleur (12) est disposé dans la nacelle de propulsion.

7. Système de propulsion de vol selon la revendication 6,
**caractérisé en ce que** l'amplificateur d'écoulement (40) est disposé dans l'entrée de la nacelle de propulsion.

8. Système de propulsion de vol selon l'une des revendications précédentes, **caractérisé en ce que** le compresseur (21, 22, 23) est constitué de plusieurs étages et la ramification (28) est disposée en aval d'au moins un premier étage (21, 22, 23).

9. Procédé permettant le refroidissement d'un échangeur de chaleur (12) d'une pile à combustible (16) d'un système de propulsion de vol en dehors d'une phase de vol d'un avion, dans lequel le système de propulsion de vol présente une conduite d'air (20) comportant au moins un compresseur (21, 22, 23) permettant d'amener de l'air comprimé pour un fonctionnement de la pile à combustible (16), **caractérisé par** les étapes consistant à :
- comprimer de l'air avec au moins un compresseur (21, 22, 23) du système de propulsion de vol ;
- diriger l'air comprimé à travers un amplificateur d'écoulement (40) sur une surface de refroidissement (13) de l'échangeur de chaleur (12) ;
- absorber l'énergie thermique de la surface de refroidissement (13) par l'écoulement d'air ; et
- évacuer l'énergie thermique avec l'écoulement d'air.

10. Procédé permettant le refroidissement d'un échangeur de chaleur selon la revendication 9, **caractérisé en ce que** l'amplificateur d'écoulement (40) dirige non seulement l'air comprimé mais aussi l'air environnant (45) sur une surface de refroidissement (13) de l'échangeur de chaleur (12).
